# EUROPÄISCHE PATENTANMELDUNG

(11) **EP 1 466 869 A1**
(43) Veröffentlichungstag der Anmeldung: **13.10.2004**
(21) Anmeldenummer: 03008167.3
(22) Anmeldetag: 08.04.2003
(51) Int. Cl.: C02F 3/00

(54) **Vorrichtung und Verfahren zur Abwasserreinigung**

(71) Anmelder: Demoulin, Gunnar, 5026 Salzburg (AT)
(72) Erfinder: Demoulin, Gunnar, 5026 Salzburg (AT)
(74) Vertreter: Tomerius, Isabel, Dr.

(57) **Zusammenfassung**

Die Erfindung betrifft eine Vorrichtung zur Abwasserreinigung, welche ein Belebungsbecken (2) mit wenigtens einer Biozönose aufweist, eine Belüftungsvorrichtung (3) zur Belüftung des Belebungsbeckens (2), eine Messvorrichtung (4) zur Messung der Sauerstoffkonzentration im Belebungsbecken (2), eine Steuervorrichtung (5) mit einer Speichereinheit, welche von der Messvorrichtung ermittelte Messwerte abspeichert, und einer Recheneinheit, welche ausgebildet ist, aus den in der Speichereinheit gespeicherten Messwerten eine Abnahmegeschwindigkeit des Sauerstoffs im Belebungsbecken (2) zu berechnen sowie an Hand der berechneten Sauerstoff-Abnahmegeschwindigkeit eine Zeitdauer zu berechnen, während welcher die Belüftungsvorrichtung betrieben wird. Die Erfindung betrifft weiter ein Verfahren zum Betrieb der Vorrichtung.

## Beschreibung

Die Erfindung betrifft eine Vorrichtung zur Abwasserreinigung sowie ein Verfahren zum Betrieb dieser Vorrichtung. Besonders geeignet sind Vorrichtung und Verfahren zu Reinigen von Abwasser im Belebtschlammverfahren, bei dem eine oder mehrere unterschiedliche Biozönosen zum Zwecke der Abwasserreinigung in ein und demselben Reinigungsprozess nebeneinander oder nacheinander Aufgaben und Teilaufgaben im Zuge des Gesamtprozesses erfüllen.

Übliche Vorrichtungen zur Abwasserreinigung (Kläranlagen) bestehen aus Belebungsbecken und Absetzbecken. Im Belebungsbecken befindlicher suspendierter Belebtschlamm (suspendierte Biozönose) übernimmt die Klärung des Abwassers durch Oxidation unter Verwendung von Sauerstoff und Reduktion unter Ausschluss von Sauerstoff und wird anschließend im nachfolgenden Nachklärbecken abgetrennt bzw. aufkonzentriert.

Hauptaufgaben der biologischen Abwasserreinigung sind die Umsetzung von organischem Kohlenstoff zu CO₂ und von Ammoniumstickstoff in Nitrat (Nitrifikation) unter Hinzuführung von Luft-Sauerstoff sowie die anschließende Reduktion des gebildeten Nitrats in gasförmigen Stickstoff (Denitrifikation), welche unter Ausschluss von Luft-Sauerstoff erfolgt und das Vorhandensein abbaubaren, noch nicht oxidierten organischen Materials erfordert.

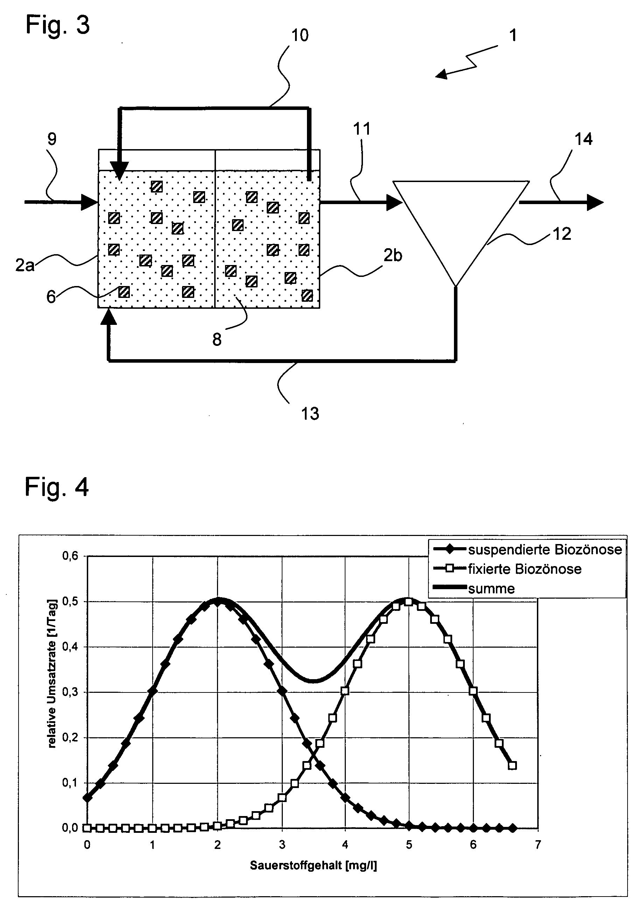

Eine herkömmliche Vorrichtung zur Abwasserreinigung ist beispielsweise in Fig. 3 dargestellt. Zur Klärung des Abwassers, welches der Vorrichtung 1 über die Zuleitung 9 zugeführt wird, wird in herkömmlichen Verfahren in so genannten Rührbecken 2a die Denitrifikation und in Belüftungsbecken 2b die Nitrifikation durchgeführt. Beide Becken bilden die Belebungsbecken der Vorrichtung. Es besteht also eine Prozesstrennung räumlicher Art der Nitrifikation von der Denitrifikation. Im Belüftungsbecken 2b befindliches Abwasser 8 kann über einen Rücklauf 10 in das Rührbecken 2a rezirkuliert werden. Außerdem ist eine Leitung 11 vorhanden, durch welche Abwasser aus dem Belüftungsbecken 2b dem Nachklärbecken 12 zugeführt wird. Der im Nachklärbecken abgetrennte Belebtschlamm wird durch Leitung 13 in das Rührbecken 2a zurückgeführt. Geklärtes Wasser verlässt die Vorrichtung durch Leitung 14.

Nach bestehender Lehrmeinung werden Nitrifikationsbecken mit Sauerstoffkonzentrationen von etwa 2 mg/l betrieben und gemäß den Möglichkeiten der Nachklärung mit Schlammkonzentrationen von 3 bis 5 g/l dimensioniert.

Ein entscheidender Bemessungsparameter ist das so genannte Schlammalter für diese Nitrifikation, welches so anzusetzen ist, dass die am langsamsten wachsenden Mikroorganismen (in diesem Fall die Nitrifikanten) mit ausreichender Sicherheit auch bei niedrigen Temperaturen stabil im System aufwachsen können und nicht ausgewaschen werden.

Das Schlammalter, das daher den Bemessungen von Kläranlagen zugrunde gelegt wird, liegt häufig in einer Größenordnung von 8 bis 12 Tagen und teilweise sogar erheblich darüber, wodurch sich relativ große Bauvolumina ergeben. Diese Bauvolumina können dadurch verkleinert werden, dass den langsam wachsenden Organismen (also den Nitrifikanten) eine Aufwuchsfläche geboten wird, auf der sie in höheren Konzentrationen stabil aufwachsen können. Man spricht dann von fixierter Biozönose.

Diese Aufwuchsflächen werden der Belebungsanlage in Form von Trägermaterialien zugegeben. Diese können bestehen aus speziellen Kunststoffteilen oder Schaumstoffteilen, zum Beispiel kleinen Zahnrädern, Walzen, Würfeln etc. Sofern sich diese freischwebend im Abwasser der Belebungsanlage befinden, spricht man von so genannten Schwebebettverfahren. Ist ein als signifikant anzusetzender Teil der Reinigungsleistung darüber hinaus suspendierter Biozönose zuzuschreiben, spricht man von kombinierten Schwebebettverfahren oder C-FIX-Anlagen. Fig. 3 verdeutlicht ein solches C-FIX-Verfahren. Das Trägermaterial, das die Aufwuchsflächen für eine Biozönose liefert, besteht hier aus kleinen Schaumstoffwürfeln 6. Zusätzlich zu der auf den Würfeln 6 aufgewachsenen Biozönose ist in den Belebungsbecken nicht aufgewachsene, im Abwasser 8 suspendierte Biozönose vorhanden. Die suspendierte Biozönose wird wie üblich über das Nachklärbecken 12 abgetrennt und aufkonzentriert, während die fixierte Biozönose über Netze oder Siebe (nicht gezeigt) am Ablauf 11 des C-FIX-Beckens 2b zurückgehalten wird.

Neben den frei schwebenden Trägermaterialien sind noch fest in das Becken eingebrachte, fadenförmige Vorrichtungen oder Vorrichtungen mit Kunststofffolien in Verwendung, welche dem selben Zweck dienen, nämlich der Erhöhung der Konzentration bestimmter gewünschter Mikroorganismen in der Belebungsanlage, ohne dieselben über ein Nachklärbecken abtrennen, aufkonzentrieren und rückführen zu müssen.

Die optimalen Sauerstoffkonzentrationen für suspendierte Biozönosen liegen im Allgemeinen für die Nitrifikation bei 2 mg/l und für die fixierte Biozönose, aufgewachsen auf Trägermaterialien, bei 2 bis 5 mg/l. Darüber hinaus existieren auch in suspendierten Biozönosen Mikroorganismen, welche eingebettet und eingeschlossen in so genannte Belebtschlammflocken sind und verschiedene metabolische Aktivitäten unter Ausschluss von gelöstem Sauerstoff ausüben. Für diesen Prozess liegt die optimale Sauerstoffkonzentration in Bereichen von deutlich unter 1 mg/l in der freien Flüssigkeitsphase, damit der gelöste Sauerstoff im Inneren der Belebtschlammflocke auf Werte absinken kann, die anoxische und anaerobe Prozesse zulassen.

Die langfristige Zusammensetzung der einzelnen Biozönosen sowie die erzielbaren Umsatzraten, insbesondere für Ammoniumstickstoff und Nitratstickstoff, hängen stark ab von der Sauerstoffkonzentration, welcher die Biozönosen auf Dauer ausgesetzt sind. Fixierte Biozönosen benötigen höhere Sauerstoffkonzentrationen für optimales Wachstum als suspendierte Biozönosen, wobei letztere bei längerer Exposition hoher Konzentrationen sogar geschädigt werden. Hieraus ergibt sich das Problem, dass bei den C-FIX-Verfahren bzw. den Verfahren der simultanen Nitrifikation/Denitrifikation (also den Verfahren, bei denen die Reaktionsräume für Nitrifikation und Denitrifikation nicht örtlich getrennt sind, sondern bei denen unter Belüftung bei niederen Sauerstoffkonzentrationen simultan im selben Becken die Aufgaben der Nitrifikation und Denitrifikation durchgeführt werden) unterschiedliche Biozönosen zusammenleben, welche bei unterschiedlich hohen Sauerstoffkonzentrationen optimale Reinigungs- und Umsatzraten erzielen. Bei Nichtvorliegen dieser optimalen Konzentrationen arbeiten sie dagegen suboptimal oder werden auf Dauer sogar geschädigt bzw. aus dem System verdrängt.

So ist zum Beispiel das Vorliegen einer permanenten Sauerstoffkonzentration von 5 mg/l bei den C-FIX-Verfahren für jenen Teil der Biozönose, der sich in Suspension befindet, auf Dauer schädlich, was sich insbesondere dadurch äußert, dass nach einiger Zeit besonders kleine Flocken, welche schwer absetzbar sind, ausgebildet werden, welche wiederum sehr schwer durch Sedimentation in einem Absetzbecken abgetrennt werden können, aber auch dadurch, dass die Reinigungsleistung insgesamt nachlässt. Umgekehrt können zu niedrige Sauerstoffkonzentrationen auf Dauer dazu führen, dass die fixierte Biozönose über eine verträgliche Stärke hinaus anwächst, wodurch die sensiblen und langsamer wachsenden Nitrifikanten überwuchert werden und daher der Prozess, der im C-FIX Verfahren ablaufen soll, instabil bzw. suboptimal verläuft.

Auch wird beobachtet, dass bei Verfahren der simultanen Nitrifikation/Denitrifikation das längerfristige Überschreiten der optimalen Konzentrationen dazu führt, dass die Belebtschlammflocken bis in die innersten Bereiche durchoxidiert werden, wodurch wichtiges Substrat für die Denitrifikation im Inneren der Schlammflocke nicht mehr zur Verfügung steht und somit auf Dauer die Leistung der Denitrifikation zum Erliegen kommt.

Aus Fig. 4 geht hervor, dass ein System mit zwei unterschiedlichen Biozönosen, welche gleiche Anteile am Gesamtumsatz eines bestimmten Stoffes haben, zwar kurzfristig an zwei verschiedenen lokalen Maxima des Sauerstoffgehaltes betrieben werden können, jedoch durch den längerfristigen Betrieb an einer der beiden Stellen zumindest eine Biozönose Schaden erleidet. Prozesstechnisch könnte zwar das lokale Minimum (im Bild hier beispielsweise bei 3,5 mg/l) als dauerhafter Gleichgewichtsbetrieb gewählt werden, jedoch ist dieser Betriebspunkt analytisch nicht erfassbar.

Im Stand der Technik ist es bisher üblich, in den Belebungsbecken die Sauerstoffkonzentration so zu regeln, dass sie auf einem bestimmten Wert konstant gehalten wird. Hierzu wird über eine Sauerstoffsonde kontinuierlich der Sauerstoffgehalt im Belebungsbecken gemessen, und entsprechend den ermittelten Messwerten wird das Gebläse, das dem Belebungsbecken Luft und damit Sauerstoff zuführt, mehr oder weniger stark betrieben, um die gewünschte Sauerstoffkonzentration im Abwasser einzuhalten. Dieses Verfahren hat jedoch verschiedene Nachteile. Zum Beispiel muss das Gebläse zur Nachregelung der Sauerstoffkonzentration mit ständig wechselnder Leistung betrieben werden. Das Gebläse läuft daher nicht mit optimalem Wirkungsgrad. Negativ bemerkbar macht sich vor allem aber, dass mit der vorab gewählten Sauerstoffkonzentration auf wechselnde Betriebsbedingungen nur schlecht reagiert werden kann. Vor allem bei Niederbelastung kann es zu Schädigungen der weniger Sauerstoff-verträglichen Biozönose im Belebungsbecken kommen, da, um den Sauerstoffgehalt konstant zu halten, weiter Luft eingeblasen wird, obwohl in der Niederbelastungsphase kein weiterer Sauerstoff benötigt wird. Häufig wird daher bei längeren Niederbelastungsphasen das Gebläse manuell abgeschaltet, um lange Phasen zu hoher Sauerstoffkonzentration zu vermeiden. Dieses Vorgehen ist jedoch nicht nur kompliziert und unökonomisch, sondern es geht hierbei auch eine genaue Prozesskontrolle verloren.

Aufgabe der Erfindung ist es entsprechend, eine Vorrichtung und ein Verfahren zur Abwasserreinigung anzugeben, die auf einfache Weise ökonomisch betrieben werden können und vor allem Biozönosen mit unterschiedlichem Sauerstoffbedarf Lebensbedingungen bieten, unter denen keine dieser Biozönosen auf Dauer ernsthaft geschädigt wird, so dass insgesamt dauerhaft eine gute Raumausbeute bei der Abwasserreinigung erzielbar ist.

Die Lösung dieser Aufgabe gelingt mit der Vorrichtung gemäß Anspruch 1 und dem Verfahren gemäß Anspruch 5. Bevorzugte Ausführungsformen und Verfahrensvarianten sind in den jeweiligen Unteransprüchen beschrieben.

Der Grundgedanke der vorliegenden Erfindung besteht darin, dass nicht mehr versucht wird, am Optimumspunkt allein einer einzelnen Biozönose oder eines einzelnen Mikroorganismus zu arbeiten, sondern unter Zusammenfassung aller Mikroorganismen und Biozönosen im Belebungsbecken auf Dauer eine optimale Raum-/Zeitausbeute zu erhalten. Anstatt, wie im Stand der Technik, vorab eine Sauerstoffkonzentration vorzugeben und diese kontinuierlich einzuhalten, trägt die Erfindung der Möglichkeit Rechnung, dass sich die Betriebsbedingungen im Verlauf der Abwasserreinigung ändern können, und erlaubt es, die Vorrichtung nach Ablauf vorgegebener Betriebsphasen auf die eventuell geänderten Bedingungen neu einzustellen, indem die Belüftungsdauer innerhalb der jeweiligen Betriebsphase entsprechend den vorgefundenen Bedingungen eingestellt wird. Im Ergebnis führt dies dazu, dass hohe Sauerstoffkonzentrationen, die auf längere Sicht die langsamer wachsenden Mikroorganismen schädigen würden, während einer jeweiligen Betriebsphase nur über einen erforderlichen Zeitraum aufrecht erhalten werden. Die kurzzeitig hohen Sauerstoffkonzentrationen decken den Sauerstoffbedarf der Mikroorganismen mit höherem Sauerstoffverbrauch, reduzieren die Expositionszeit für die anderen Biozönosen jedoch so, dass ihnen Erholzeiten bleiben und sie nicht auf Dauer geschädigt werden.

Erfindungsgemäß dient die Abnahmegeschwindigkeit des Sauerstoffs im Belebungsbecken dazu, die Zeitdauer zu berechnen, während welcher dem Belebungsbecken Sauerstoff (üblicherweise in Form von Luft) zugeführt wird. Zu diesem Zweck ist in der erfindungsgemäßen Vorrichtung zur Abwasserreinigung eine Messvorrichtung vorhanden, mit der die Sauerstoffkonzentration im Belebungsbecken bestimmt wird. Die Messwerte werden in einer Speichereinheit einer Steuervorrichtung abgespeichert, und eine Recheneinheit berechnet aus den in der Speichereinheit abgespeicherten Messwerten die Abnahmegeschwindigkeit des Sauerstoffs im Belebungsbecken. Anhand der berechneten Abnahmegeschwindigkeit des Sauerstoffs wiederum wird die Zeitdauer berechnet, während welcher die Belüftungsvorrichtung betrieben wird.

Im einzelnen wird der Betrieb in eine Messphase und in eine Regelphase aufgeteilt, welche der Messphase nachfolgt und eine vorab festgelegte Dauer besitzt. Die Messphase (A) teilt sich in eine erste Phase (A1) und eine zweite Phase (A2) auf. Während der ersten Phase (A1) wird die Belüftungsvorrichtung so lange betrieben, bis eine erste Sauerstoffkonzentration erreicht ist. Anschließend wird die Belüftungsvorrichtung abgeschaltet und während der zweiten Phase (A2) nicht betrieben, so dass die Sauerstoffkonzentration auf eine zweite Konzentration absinkt, die geringer ist als die erste Sauerstoffkonzentration in der Phase (A1). Aus den Messwerten der Sauerstoffkonzentration wird die Abnahmegeschwindigkeit des Sauerstoffs während der zweiten Phase (A2) berechnet. Ausgehend von dieser Sauerstoff-Abnahmegeschwindigkeit wird nun die Zeitdauer (B1) berechnet, während welcher in der anschließenden Regelphase (B) die Belüftungsvorrichtung betrieben werden soll. In der Regelphase (B) wird dann die Belüftungsvorrichtung während des errechneten Zeitraums (B1) betrieben und im restlichen Zeitraum (B2) der Regelphase (B) nicht betrieben. In welcher Reihenfolge die Phasen B1 und B2 aufeinander folgen, spielt dabei prinzipiell keine Rolle. Es ist sogar möglich, wenn auch nicht bevorzugt, die Phasen B1 und B2 in jeweils mehrere zeitliche Abschnitte aufzuteilen und diese einander abwechseln zu lassen, solange die errechnete Dauer der Phasen B1 und B2 eingehalten wird. Zweckmäßig folgt auf die Messphase (A2), in der die Belüftungsvorrichtung stillsteht, die Stillstandsphase (B2) der Regelphase, dann schließt sich die Belüftungsphase (B2) an.

Erfindungsgemäß wird also nicht nur eine bestimmte Sauerstoffkonzentration eingehalten, sondern auch die den Mikroorganismen zur Verfügung gestellte Sauerstoffmenge wird über die Dauer des Betriebs der Belüftungsvorrichtung unter Berücksichtigung der jeweiligen Belastung in der Abwasserreinigungsvorrichtung gesteuert. Das erfindungsgemäße Verfahren ermöglicht so eine sehr einfache Steuerung einer Abwasserreinigungsvorrichtung, die auf einfache Weise den individuellen Anforderungen der Anlage angepasst werden kann und sicherstellt, dass während jeder Betriebsphase Sauerstoffkonzentrationen im Belebungsbecken vorhanden sind, die allen im Belebungsbecken vorhandenen Biozönosen eine Koexistenz unter günstigen Bedingungen ermöglicht und damit gute Raum-/Zeitausbeuten erzielt.

Die erfindungsgemäße Vorrichtung benötigt dabei keine Komponenten, die nicht bereits in herkömmlichen Vorrichtungen Anwendung gefunden haben, und das erfindungsgemäße Verfahren kann auch in herkömmlichen Kläranlagen, die nach dem Belebtschlammverfahren arbeiten, eingesetzt werden. Zudem bietet sich der Vorteil, dass die Belüftungsvorrichtung bei welcher es sich üblicherweise um ein Gebläse handeln wird, mit dem den Belebungsbecken Luft zugeführt wird, stets bei sehr hohem Wirkungsgrad betrieben werden kann. Im Unterschied zum Stand der Technik ist es nämlich nicht notwendig, das Gebläse mit stark wechselnder Leistung laufen zu lassen, um einen bestimmten Sauerstoffkonzentrationswert konstant zu halten. Vielmehr wechseln sich erfindungsgemäß zweckmäßig Phasen des Nichtbetriebs der Belüftungsvorrichtung mit solchen Phasen ab, bei denen das Gebläse mit sehr konstanter Leistung nahe dem optimalen Wirkungsgrad betrieben wird. Auf diese Weise ist ein kostengünstiger, verschleißarmer Betrieb mit hohem Wirkungsgrad möglich.

Um sicherzustellen, dass in jedem Fall hinreichend Sauerstoff für die Biozönosen zur Verfügung steht, kann zusätzlich zu Mess- und Regelphase eine Belüftungsphase vorgesehen sein, während welcher die Belüftungsvorrichtung durchgängig betrieben wird. Diese Belüftungsphase ist in ihrer zeitlichen Dauer von der Steuervorrichtung nicht beeinflussbar. Die zusätzliche Belüftungsphase kann vor, nach oder innerhalb einer Regelphase eingeschoben werden. Wird die zusätzliche Belüftungsphase innerhalb einer Regelphase eingeschoben, unterbricht sie diese Regelphase, ändert deren Zeitdauer aber nicht. Die Belüftungsphasen können entweder in jedem Betriebszyklus aus Mess- und Regelphase eingeschoben werden oder nur in einem vorbestimmten Rhythmus, beispielsweise während jedes zweiten Betriebszyklus. Auch dieser Rhythmus wird jedoch zweckmäßig so vorgegeben, dass er von der Steuervorrichtung nicht mehr zu beeinflussen ist.

Zweckmäßigerweise wird das erfindungsgemäße Verfahren so durchgeführt, dass sich mehrere Abfolgen von Mess- und anschließender Regelphase und gegebenenfalls Belüftungsphase wiederholen. Während jeder Messphase wird erneut die Sauerstoff-Abnahmegeschwindigkeit bestimmt, und entsprechend den jeweils vorgefundenen Bedingungen wird die Belüftung in der entsprechenden anschließenden Regelphase durchgeführt. Die Belüftung trägt also den in der vorhergehenden Messphase vorgefundenen Bedingungen Rechnung. Damit kann auch auf Phasen niedriger Belastung angemessen reagiert werden. Eine Steuerung der Anlage von Hand ist nicht erforderlich.

Die Länge eines Betriebszyklus aus Messphase (A), Regelphase (B) und eventuell Belüftungsphase (C) richtet sich zweckmäßig nach der jeweiligen Abwasserreinigungsvorrichtung (Kläranlage). Je größer die Schwankungen im Zulauf der Vorrichtung sind, also zum Beispiel je häufiger sich Phasen mit niedriger Belastung mit Phasen höherer Belastung abwechseln, desto kürzer werden die Betriebszyklen aus Mess-, Regel- und Belüftungsphase sein, um den Schwankungen durch Anpassung der jeweiligen Belüftungsbedingungen Rechnung tragen zu können. Um ein Beispiel zu geben, sei eine kommunale Kläranlage genannt, in deren Belebungsbecken von 100 m³ das Abwasser eine hydraulische Aufenthaltszeit von etwa 24 Stunden besitzt. Ein Betriebstag kann zum Beispiel in 6 Betriebszyklen aus Mess- und Regelphase sowie gegebenenfalls Belüftungsphase von jeweils insgesamt 4 Stunden Dauer aufgeteilt werden. Als Faustregel beträgt die Gesamtdauer eines Betriebszyklus bis zu 300 % der hydraulischen Aufenthaltszeit des Abwassers im Belebungsbecken. Besonders geeignet ist eine Gesamtdauer von 20 bis 100 % der hydraulischen Aufenthaltszeit des Abwassers im Belebungsbecken.

Auch die Länge von Messphase, Regelphase und gegebenenfalls Belüftungsphase wird hauptsächlich von der Art der Abwasserreinigungsvorrichtung und den zu erwartenden Bedingungen bestimmt.

Wie erwähnt, besitzt die Regelphase (B) eine fest vorgegebene Dauer. Die Messphase (A) kann dagegen von Betriebszyklus zu Betriebszyklus unterschiedliche Längen aufweisen. Dies hängt einerseits damit zusammen, dass die erste Phase (A1), in der eine erste Sauerstoffkonzentration eingestellt wird, je nach Ausgangsniveau unterschiedlich lang sein kann, bis die gewünschte Sauerstoffkonzentration erreicht ist. Auch die zweite Phase (A2) kann unterschiedlich lang sein. Beispielsweise kann sie so lange dauern, bis die Sauerstoffkonzentration von dem ersten Wert zu Beginn der Phase (A2) auf einen bestimmten prozentualen Anteil (z.B. die Hälfte) des ersten Werts abgesunken ist. Die Dauer der zweiten Phase (A2) wird zweckmäßig so bemessen, dass die Differenz zwischen erster und zweiter Sauerstoffkonzentration groß genug ist, um Fehler bei der Bestimmung der Sauerstoff-Abnahmegeschwindigkeit zu minimieren. Natürlich ist es ebenso gut möglich, auch für die Messphase (A) eine bestimmte Länge vorzugeben, die in jedem Betriebszyklus eingehalten wird. In der Regel beträgt die Dauer der Messphase bis zu 30 Minuten und liegt im Allgemeinen zwischen 5 und 25 Minuten.

Je nach Abnahme-Geschwindigkeit der Sauerstoffkonzentration, die in der Messphase (A) bestimmt wurde, kann der Zeitraum (B1), während dessen die Belüftungsvorrichtung in der Regelphase (B) betrieben wird, zwischen 0 und 100 % der Zeitdauer der Regelphase (B) betragen. Je größer die Sauerstoff-Abnahmegeschwindigkeit während der Messphase, desto länger wird der Zeitraum (B1) sein, während dessen die Belüftungsvorrichtung in der Regelphase (B) betrieben wird.

Die Berechnung der Zeitdauer, während welcher die Belüftungsvorrichtung innerhalb der Regelphase betrieben wird, erfolgt im einzelnen bevorzugt dadurch, dass die in der Messphase berechnete Sauerstoff-Abnahmegeschwindigkeit in Relation zur maximalen möglichen Sauerstoff-Eintragsteistung pro Zeit bei fortgesetztem Betrieb der Belüftungsvorrichtung gesetzt wird. Der so erhaltene Quotient wird mit der festgelegten Dauer der Regelphase multipliziert und ergibt die Zeitdauer des Betriebs des Gebläses während der Regelphase. Im übrigen Zeitraum der Regelphase wird die Belüftungsvorrichtung nicht betrieben. Üblicherweise ergeben sich für die Betriebsdauer der Belüftungsvorrichtung in der Regelphase Werte von bis zu 20 Minuten. Bevorzugt beträgt die Betriebszeit während der Regelphase 5 bis 15 Minuten. Die Gesamtdauer der Regelphase liegt im Allgemeinen zwischen 20 Minuten und 6 Stunden, insbesondere zwischen 1 und 4 Stunden.

Auch die Sauerstoffkonzentrationen, die während der einzelnen Phasen eingehalten werden, richten sich nach der Art der Anlage. Hier ist insbesondere der Grundaufbau der Abwasserreinigungsvorrichtung zu berücksichtigen, also ob es sich beispielsweise um eine Vorrichtung mit räumlicher Trennung der Nitrifikation/Denitrifikation handelt oder um eine solche Anlage, in der Nitrifikation und Denitrifikation in einem gemeinsamen Becken durchgeführt werden. Außerdem ist zu berücksichtigen, ob es sich um ein Schwebebettverfahren wie beispielsweise das C-FIX-Verfahren handelt. Im Allgemeinen gilt, dass im erfindungsgemäßen Verfahren die Belüftungsvorrichtung so betrieben werden kann, dass die beim Einleiten von Luft erhaltenen Sauerstoffkonzentrationen in etwa in dem auch bisher üblichen Bereich zu liegen kommen. Da im erfindungsgemäßen Verfahren die hohen Sauerstoffkonzentrationen in den einzelnen Betriebsphasen jedoch nur für einen relativ kurzen Zeitraum erreicht werden, liegen die erfindungsgemäß bevorzugt eingestellten Sauerstoffkonzentrationen jedoch eher im oberen Bereich der bisher üblichen Werte oder sogar darüber. Auch diese höheren Konzentrationen können verkraftet werden, da sie erfindungsgemäß nur jeweils einen relativ kurzen Zeitraum vorliegen und so nicht zu einer ernsthaften und dauernden Schädigung der Mikroorganismen führen.

Während der Messphase (A) wird die Belüftungsvorrichtung in der ersten Phase (A1) zweckmäßig betrieben, bis sich eine Sauerstoffkonzentration zwischen 0,5 und 8 mg/l einstellt. Bevorzugte Werte der Sauerstoffkonzentration in dieser Phase liegen zwischen 1 und 5 mg/l.

In der Betriebsphase (B1) während der Regelphase (B) wird die Belüftungsvorrichtung zweckmäßig so betrieben, dass sich eine Sauerstoffkonzentration einstellt, die zwischen 0,5 und 7 mg/l und bevorzugt zwischen 1 und 6 mg/l liegt.

In einer bevorzugten Variante der Erfindung ist die Abwasserreinigungsvorrichtung zusätzlich mit einer Messvorrichtung zur Messung der Temperatur im Belebungsbecken ausgestattet. Dies ermöglicht eine Temperaturkorrektur bei der Bestimmung des Zeitraums (B1), während welchem die Belüftungsvorrichtung in der Regelphase (B) betrieben wird. Dadurch kann der Tatsache Rechnung getragen werden, dass sich die Sauerstoffaufnahme mit der Temperatur ändert. Die Temperaturkorrektur pro Grad Celsius Abweichung von einer vorgegebenen Bezugstemperatur liegt in einer Größenordnung von ± 30 % der für die Bezugstemperatur errechneten Zeitdauer (B1). Zweckmäßig sind Korrekturmargen von -15 bis +15 %. Bei einer gegenüber der Bezugstemperatur erhöhten Messtemperatur kann beispielsweise der Zeitraum des Gebläsebetriebs verringert werden, und entsprechend verlängert sich die Zeit, während welcher das Gebläse nicht betrieben werden muss.

Wie bereits erwähnt, eignet sich die Erfindung grundsätzlich zum Einsatz in Abwasserreinigungsvorrichtungen (Kläranlagen) und in Verfahren, die nach dem Belebtschlammverfahren mit einem oder mehreren Belebungsbecken arbeiten, unabhängig davon, ob es eine räumliche Trennung zwischen Nitrifikation und Denitrifikation gibt. Besonders geeignet ist die Erfindung auf Verfahren anwendbar, bei denen mehrere Biozönosen mit unterschiedlichem Sauerstoffbedarf an der Abwasserreinigung beteiligt sind. Eine bevorzugte Anwendung liegt im Bereich der kombinierten Schwebebettverfahren oder C-FIX-Verfahren. Am Beispiel eines solchen Verfahrens soll die Erfindung nun unter Bezugnahme auf eine Zeichnung weiter beschreiben werden.

In der Zeichnung zeigen schematisch:
- Fig. 1: eine Teilansicht einer erfindungsgemäßen Abwasserreinigungsvorrichtung,
- Fig. 2: einen Betriebszyklus im erfindungsgemäßen Verfahren zum Betrieb einer Abwasserreinigungsvorrichtung,
- Fig. 3: eine Abwasserreinigungsvorrichtung, wie sie auch im Rahmen der Erfindung verwendet werden kann, und
- Fig. 4: relative Umsatzraten zweier Biozönosen in Abhängigkeit vom Sauerstoffgehalt des Abwassers.

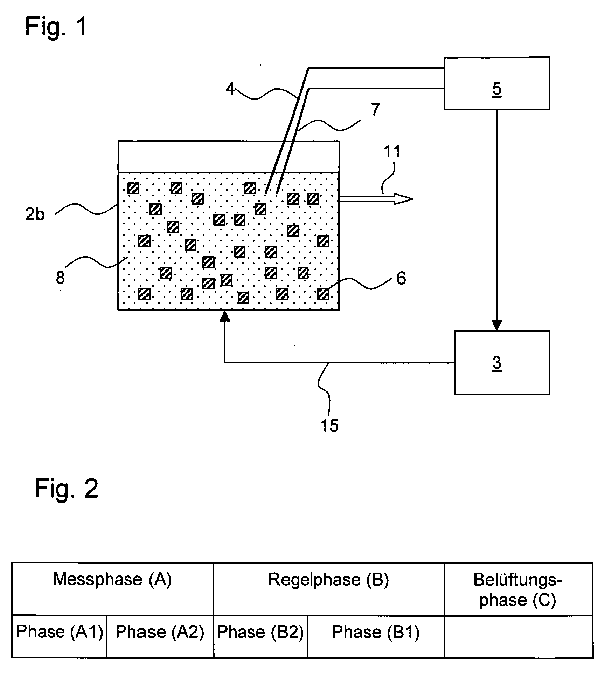

Im einzelnen zeigt Fig. 1 einen Ausschnitt einer erfindungsgemäßen Abwasserreinigungsvorrichtung 1 mit einem Belüftungsbecken 2b, das zum Beispiel als Belüftungsbecken in der in Fig. 3 beschriebenen Anlage angeordnet sein kann. Anordnung und Funktion der einzelnen Becken entsprechen dem, was bereits in Zusammenhang mit Fig. 3 erläutert wurde, so dass hier nicht erneut darauf eingegangen werden muss. Gleiche Bezugszeichen bezeichnen gleiche Komponenten wie in Fig. 3.

Im Belüftungsbecken 2b, dem durch die Belüftungsvorrichtung 3 über eine Leitung 15 Luft und damit Sauerstoff zugeführt werden kann, befindet sich Abwasser 8, das mit Hilfe verschiedener Biozönosen gereinigt werden soll. Die Biozönosen liegen einerseits in suspendierter Form vor, andererseits als fixierte Biozönose, aufgewachsen auf Trägermaterial, hier in Form von im Abwasser schwebenden Schaumstoffwürfeln 6.

In das Abwasser 8 tauchen zwei Messsonden ein, von denen Messvorrichtung 4 zur Messung der Sauerstoffkonzentration dient und Messvorrichtung 7 zum Messen der Temperatur im Belüftungsbecken 2b. Beide Messvorrichtungen übermitteln ihre Messergebnisse an die Steuervorrichtung 5, die eine Speichereinheit (nicht dargestellt) zum Speichern der Messergebnisse aufweist sowie eine (ebenfalls nicht dargestellte) Recheneinheit. In der Recheneinheit werden aus den Messergebnissen die Sauerstoff-Abnahmegeschwindigkeit und aus dieser wiederum die Zeitdauer berechnet, mit die Belüftungsvorrichtung 3, die von der Steuervorrichtung 5 gesteuert wird, in das Belüftungsbecken 2b Luft einleitet.

Die zeitliche Abfolge des erfindungsgemäßen Verfahrens ist schematisch in Fig. 2 dargestellt. Zur Veranschaulichung ist ein Betriebszyklus wiedergegeben, der sich aus einer Messphase (A), einer Regelphase (B) und einer Belüftungsphase (C) zusammensetzt. Während des Betriebs der Vorrichtung wiederholt sich der Betriebszyklus kontinuierlich. Nach einem Zyklus A-B-C folgt also erneut ein Zyklus A-B-C usw.

Bei der Abwasserreinigungsvorrichtung 1 kann es sich beispielsweise um eine kommunale Kläranlage handeln. Eine für die Klärung kommunaler Abwässer, die überwiegend aus privaten Haushalten stammen, übliche hydraulische Aufenthaltszeit im Belebungsbecken (mit einem Volumen von zum Beispiel 100 m³) liegt hier bei ca. 24 Stunden, und entsprechend sind Betriebszykluslängen (A + B + C) im erfindungsgemäßen Verfahren von zum Beispiel 4 Stunden geeignet. Während eines Betriebstags ergibt sich damit eine Abfolge von 6 Betriebszyklen.

Die Messphase (A) eines jeden Betriebszyklus teilt sich in eine erste Phase (A1) auf, in der die Belüftungsvorrichtung 3 betrieben wird, um eine erste Sauerstoffkonzentration einzustellen. Im dargestellten Fall wird zum Beispiel eine Sauerstoffkonzentration von 5 mg/l vorgegeben. In Phase (A2) wird die Belüftungsvorrichtung 3 nicht mehr betrieben, und die Sauerstoffkonzentration fällt. Während der Abnahme der Sauerstoffkonzentration in Phase (A2) werden mit der Sauerstoffmessvorrichtung 4 und der Temperaturmessvorrichtung 7 Messwerte ermittelt, an die Speichereinheit der Steuervorrichtung 5 übermittelt und dort abgespeichert. Aus den gespeicherten Messwerten errechnet eine Recheneinheit der Steuervorrichtung die Abnahmegeschwindigkeit des Sauerstoffs während der Phase (A2). Die Messungen werden fortgesetzt, bis eine bestimmte Sauerstoffkonzentration erreicht ist, zum Beispiel die Hälfte der ersten Konzentration von 5 mg/l, also 2,5 mg/l. Die Gesamtlänge der Messphase (A) beträgt beispielsweise 30 Minuten.

Aus der berechneten Sauerstoff-Abnahmegeschwindigkeit errechnet die Recheneinheit der Steuervorrichtung 5 die Zeitdauer (B1), während derer die Belüftungsvorrichtung 3 in der auf die Messphase (A) folgenden Regelphase (B) betrieben wird. Für die Regelphase (B) wurde vorab, unter Berücksichtigung der Auslegung und der Gegebenheiten der Anlage, eine Zeitdauer von beispielsweise 200 Minuten festgelegt. Dieser Wert ist in der Speichereinheit der Steuervorrichtung 5 hinterlegt. Außerdem wurde die maximale Eintragsleistung an Sauerstoff durch die Belüftungsvorrichtung bei fortgesetztem Betrieb ermittelt. Der ermittelte Wert von zum Beispiel 30 mg/l·h ist ebenfalls in der Steuervorrichtung 5 abgespeichert. Der Wert bedeutet, dass bei einem kontinuierlichen Betrieb der Belüftungsvorrichtung 3 mit optimalem Wirkungsgrad pro Stunde 30 mg Sauerstoff pro Liter Abwasser in das Belebungsbecken eingetragen werden. Es sei angenommen, dass in der Messphase (A) eine Sauerstoff-Abnahmegeschwindigkeit von 3 mg/l·h errechnet wurde. Dieser Wert wird nun durch den maximalen Eintragwert geteilt. Es ergibt sich daraus ein Quotient von 1/10. Multipliziert man diesen Quotienten mit der Dauer der Regelphase (B) von 200 Minuten, erhält man als Ergebnis die Zeitdauer (B1), während derer die Belüftungsvorrichtung 3 während der Regelphase (B) betrieben werden soll. Die Betriebsdauer (B1) beträgt also im vorliegenden Beispiel 20 Minuten.

Entsprechend der vorstehenden Berechnung steuert die Steuervorrichtung 5 die Belüftungsvorrichtung 3 während der Regelphase (B) also folgendermaßen: Im Anschluss an die Messphase (A) wird die Belüftungsvorrichtung 3 zunächst in Phase (B2 ) (Dauer = B - B1) 180 Minuten nicht betrieben. Danach läuft die Belüftungsvorrichtung bei ihrem optimalen Wirkungsgrad mit konstanter Leistung 20 Minuten lang (Phase (B1)).

Der 200-minütigen Regelphase (B) schließt sich dann eine Belüftungsphase (C) an, in der die Belüftungsvorrichtung 10 Minuten lang mit konstanter Leistung weiterläuft. Diese Phase C ist fest vorgegeben, hängt nicht von den Messergebnissen in Messphase (A) ab und ist von der Steuervorrichtung nicht zu beeinflussen. Belüftungsphase (C) stellt sicher, dass während eines Betriebszyklus in jedem Fall eine ausreichende Sauerstoffversorgung der Biozönosen gewährleistet ist.

Die oben angegebene Berechnung beruht auf der Annahme, dass während der Messphase (A) keine Abweichung von der in der Steuervorrichtung abgespeicherten Bezugstemperatur (zum Beispiel der normalen Betriebstemperatur) festgestellt wurde. Falls hier eine Abweichung ermittelt wird, sieht die Erfindung eine Korrektur der berechneten Ergebnisse in Abhängigkeit von der mittels der Messvorrichtung 7 ermittelten Temperaturabweichung vor. Bei einer gegenüber der Bezugstemperatur erhöhten Temperatur wird die Betriebszeit (B1) auf Kosten der Ruhezeit (B2) verkürzt, während sich (B1) entsprechend um einen Korrekturfaktor verlängert, wenn sich die Temperatur verringert. Übliche Korrekturbereiche liegen bei ± 15 % pro Grad Celsius Temperaturabweichung.

## Patentansprüche

1. Vorrichtung (1) zur Abwasserreinigung, welche ein Belebungsbecken (2) mit wenigstens einer Biozönose aufweist, eine Belüftungsvorrichtung (3) zur Belüftung des Belebungsbeckens (2), eine Messvorrichtung (4) zur Messung der Sauerstoffkonzentration im Belebungsbecken (2), eine Steuervorrichtung (5) zur Steuerung der Belüftungsvorrichtung (3) mit einer Speichereinheit, welche von der Messvorrichtung (4) ermittelte Messwerte abspeichert, und einer Recheneinheit, welche ausgebildet ist, aus den in der Speichereinheit gespeicherten Messwerten eine Abnahmegeschwindigkeit des Sauerstoffs im Belebungsbecken (2) zu berechnen sowie an Hand der berechneten Sauerstoff-Abnahmegeschwindigkeit eine Zeitdauer zu berechnen, während welcher die Belüftungsvorrichtung (3) betrieben wird.

2. Vorrichtung zur Abwasserreinigung gemäß Anspruch 1, **dadurch gekennzeichnet, dass** die Belüftungsvorrichtung (3) wenigstens ein Gebläse zum Einleiten von Luft in das Belebungsbecken (2) aufweist.

3. Vorrichtung zur Abwasserreinigung gemäß Anspruch 1 oder 2, **dadurch gekennzeichnet, dass** im Belebungsbecken (2) auf Trägermaterial und insbesondere auf frei im Belebungsbecken (2) schwebendem Trägermaterial (6) fixierte Biozönose vorhanden ist.

4. Vorrichtung zur Abwasserreinigung gemäß einem der Ansprüche 1 bis 3, **dadurch gekennzeichnet, dass** sie eine Temperaturmessvorrichtung (7) zur Messung der Temperatur im Belebungsbecken (2) umfasst.

5. Verfahren zum Betrieb einer Vorrichtung (1) zur Abwasserreinigung gemäß einem der Ansprüche 1 bis 4, bei weichem die Steuervorrichtung (5) den Betrieb in eine Messphase (A) und eine nachfolgende Regelphase (B) mit vorab festgelegter Dauer aufteilt, wobei in der Messphase (A)
in einer ersten Phase (A1) die Belüftungsvorrichtung (3) solange betrieben wird, bis eine erste Sauerstoffkonzentration erreicht ist,
anschließend die Belüftungsvorrichtung (3) abgeschaltet und während einer zweiten Phase (A2) nicht betrieben wird, bis eine zweite Sauerstoffkonzentration erreicht ist, die geringer ist als die erste Sauerstoffkonzentration,
aus den in der zweiten Phase (A2) gemessenen Sauerstoffkonzentrationen die Abnahmegeschwindigkeit der Sauerstoffkonzentration in der zweiten Phase (A2) errechnet wird
und an Hand der berechneten Sauerstoff-Abnahmegeschwindigkeit eine Zeitdauer (B1) berechnet wird, während welcher die Belüftungsvorrichtung (3) in der Regelphase (B) betrieben werden soll,
und wobei in der Regelphase (B) die Belüftungsvorrichtung (3) während der errechneten Zeitdauer (B1) betrieben und im verbleibenden Zeitraum (B2) der Regelphase (B) nicht betrieben wird.

6. Verfahren gemäß Anspruch 5, **dadurch gekennzeichnet, dass** es mit sich wiederholenden Abfolgen von Mess- und Regelphasen durchgeführt wird.

7. Verfahren nach Anspruch 5 oder 6, **dadurch gekennzeichnet, dass** vor, nach oder innerhalb wenigstens einer Regelphase (B) eine zeitlich unveränderliche Belüftungsphase (C) eingeschoben ist, in welcher die Belüftungsvorrichtung (3) durchgängig betrieben wird.

8. Verfahren gemäß einem der Ansprüche 5 bis 7, **dadurch gekennzeichnet, dass** die Gesamtdauer von Messphase (A), Regelphase (B) und gegebenenfalls Belüftungsphase (C) bis zu 300 % und insbesondere zwischen 20 und 100 % der hydraulischen Aufenthaltszeit des Abwassers (8) im Belebungsbecken (2) beträgt.

9. Verfahren gemäß einem der Ansprüche 1 bis 8, **dadurch gekennzeichnet,**
**dass** die Messphase (A) bis zu 30 Minuten und insbesondere 5 bis 25 Minuten beträgt,
**dass** die Gesamtdauer der Regelphase (B) zwischen 20 Minuten und 6 Stunden, insbesondere zwischen 1 und 4 Stunden, liegt und
**dass** die Dauer (B1), während derer in der Regelphase (B) die Belüftungsvorrichtung (3) betrieben wird, bis zu 20 Minuten und insbesondere 5 bis 15 Minuten beträgt.

10. Verfahren gemäß einem der Ansprüche 1 bis 9, **dadurch gekennzeichnet,**
**dass** in der Phase (A1) die Belüftungsvorrichtung (3) betrieben wird, bis eine Sauerstoffkonzentration zwischen 0,5 und 8 mg/l und insbesondere zwischen 1 und 5 mg/l erreicht ist, und
**dass** die Belüftungsvorrichtung (3) in der Regelphase (B) während der Zeitdauer (B1) so betrieben wird, dass sich eine Sauerstoffkonzentration von 0,5 bis 7mg/l und insbesondere von 1 bis 6 mg/l einstellt

11. Verfahren gemäß einem der Ansprüche 1 bis 10, **dadurch gekennzeichnet, dass** die Belüftungsvorrichtung (3) in allen ihren Betriebsphasen mit einer Leistung im Bereich des optimalen Wirkungsgrades der Belüftungsvorrichtung betrieben wird.

12. Verfahren gemäß einem der Ansprüche 1 bis 11, **dadurch gekennzeichnet, dass** bei hohen Sauerstoff-Abnahmegeschwindigkeiten die Zeitdauer (B1) auf Kosten der Zeitdauer (B2) erhöht und bei niedrigeren Sauerstoff-Abnahmegeschwindigkeiten die Zeitdauer (B1) auf Kosten der Zeitdauer (B2) erniedrigt wird.

13. Verfahren gemäß einem der Ansprüche 1 bis 12, **dadurch gekennzeichnet, dass** die Zeitdauer (B1) errechnet wird, indem die berechnete Sauerstoff-Abnahmegeschwindigkeit in Relation zur maximalen möglichen Sauerstoff-Eintragsleistung pro Zeit bei fortgesetztem Betrieb der Belüftungsvorrichtung (3) gesetzt wird und der so erhaltene Quotient mit der festgelegten Dauer der Regelphase (B) multipliziert wird, um die Zeitdauer (B1) zu ergeben.

14. Verfahren gemäß einem der Ansprüche 1 bis 13, **dadurch gekennzeichnet, dass** in der Messphase (A) die Temperatur des Abwassers (8) im Belebungsbecken (2) bestimmt und die errechnete Zeitdauer (B1) entsprechend der ermittelten Temperatur korrigiert wird, wobei die Temperaturkorrektur in einem Bereich von -30 bis +30 % und insbesondere -15 bis +15% der errechneten Zeitdauer (B1) pro Grad Celsius Abweichung gegenüber einer festgelegten Bezugstemperatur beträgt.
